# EUROPEAN PATENT SPECIFICATION

(11) **EP 3 710 873 B1**
(45) Date of publication and mention of the grant of the patent: **23.08.2023**
(21) Application number: 18893105.9
(22) Date of filing: 10.12.2018
(51) Int. Cl.: F21V 8/00, G02B 5/18, G02B 27/01, G02B 27/42

(54) **OPTICAL WAVEGUIDE AND DIFFRACTIVE WAVEGUIDE DISPLAY**
ANZEIGE VON OPTISCHEM WELLENLEITER UND DIFFRAKTIVEM WELLENLEITER
GUIDE D'ONDES OPTIQUE ET AFFICHAGE À GUIDE D'ONDES DIFFRACTIF

(30) Priority: 22.12.2017 FI 20176159
(43) Date of publication of application: 23.09.2020
(73) Proprietor: Dispelix Oy, 02130 Espoo (FI)
(72) Inventor: BLOMSTEDT, Kasimir, 02130 Espoo (FI)
(74) Representative: Kirkpatrick
(86) International application number: PCT/FI2018/050893
(87) International publication number: WO 2019/122505

(56) References cited:
- WO-A1-2017/204840
- US-A1- 2008 225 393
- US-A1- 2011 019 258
- US-A1- 2015 086 163
- US-A1- 2017 031 171

## Description

### Field of the Invention

The invention relates to optical waveguides. In particular, the invention relates to waveguides comprising at least one diffractive optical element for modifying the light field in the waveguide. Such waveguides can be used in personal display devices, such as head-mounted displays (HMDs) and head-up displays (HUDs).

### Background of the Invention

Waveguides are key image-forming elements in many modern personal display devices. The image to be displayed can be coupled into and out of the waveguide, as well as modified within the waveguide, using diffractive gratings. For example, there may be provided an in-coupling grating for coupling an image from a projector into the waveguide, an exit pupil expander grating for expanding the light field in one or more in-plane dimensions of the waveguide, and an out-coupling grating which couples the light field out of the waveguide to the user's eye. Optical waveguides having multiple gratings are known from US-A1-2015086163 and US-A1-2008225393.

### Summary of the Invention

It is an aim of the invention to overcome at least some of the drawbacks of prior art. A particular aim is to provide a diffractive waveguide element that allows for implementation of complex optical functions and which reduces the risk of beam fragmentation and/or power loss.

In particular, the invention is characterized by what is stated in the independent claims. According to one aspect, there is provided an optical waveguide comprising a waveguide body capable of guiding light in a waveguide plane in two dimensions, and a diffractive optical element provided on a surface or within the waveguide body, the diffractive optical element extending in said two dimensions and each location of the diffractive optical element having a diffractive optical response for light directed thereto. According to the invention, the diffractive optical element is a multi-region element comprising a plurality of regions with different diffractive optical responses. Furthermore, the diffractive optical response of the diffractive optical element between said regions changes continuously in the waveguide plane. The change may take place along one or two dimensions of the plane.

According to another aspect, the invention provides a diffractive waveguide display comprising an optical waveguide as described above and an image projector for providing an image-containing light field inside the optical waveguide.

The invention offers significant benefits. First, a multi-region DOE without sharp interfaces between the regions allows for implementation of waveguides having complex optical behavior but without the drawback of beam fragmentation. Continuous transition instead of fading the diffractive pattern at the interfaces increases the total efficiency of the DOE and also reduces beam fragmentation. As a result, light may take more bounces within the waveguide and interacting with the DOE, still maintaining its direction and power, i.e., heading where it is intended to go with good efficiency.

Compared with sharp interface DOEs, continuous transitions also make the present DOE less sensitive to changes in position and angle of incoming light and light propagating in the waveguide. Thus, the behavior of the DOE is more predictable and robust.

The dependent claims are directed to selected embodiments of the invention.

Next, embodiments of the invention and advantages thereof are discussed in more detail with reference to the attached drawings.

### Brief Description of the Drawings

Fig. 1 shows a schematic perspective view of a waveguide having a DOE with continuous diffractive optical response and three-dimensional graph of an exemplary response.
Figs. 2A and 2B show side views of waveguides and two-dimensional response graphs of two different, i.e. an entirely continuous and a piecewise constant, diffractive optical elements

### Detailed Description of Embodiments

### Definitions

The term "diffractive optical element" (DOE) refers to a zone of the waveguide body comprising a physical structure capable of diffracting light. The structure typically comprises a pattern of features having a size of 1 µm or less. Examples of DOEs commonly used in conventional personal display devices are in-coupling gratings, exit pupil expander gratings and out-coupling gratings. However, it should be noted that in the present invention, to achieve the continuous transition, all or part of the DOE can be non-periodic, whereby the term DOE herein covers also other structures than gratings (in the sense that the term "grating" is usually understood as a periodic structure).

The term "intermediate DOE" is referred to as a DOE that is not intended to out-couple light directly therefrom, but to change the propagation path of light rays from one layer to another. Due to imperfections, a certain amount of out-coupling may, however occur. Typically, at least 90% of propagating light hitting the intermediate DOE, continues propagation in either the original layer or the new layer, depending on the predefined optical response.

"Diffractive optical response" of the DOE refers to the change in the angular and/or spectral distribution of light by the DOE due to diffraction. To concretize, the response may be e.g. diffraction intensity to a specific angle for a fixed incident angle and wavelength. A diffractive microstructure pattern of the DOE generates the diffractive optical response.

Continuous change in the diffractive optical response means that a small change of location of the DOE for incident light beam (in the order of feature size of the microstructure pattern) results in small change in the response for at least one wavelength. Typically, the change is continuous for a wide range of incident angles and/or wavelengths.

"Non-periodic" structure herein means a structure that does not have building unit that repeats at regular intervals. In this context, traditional gratings or zones thereof, in which the same grating unit (like a binary ridge/groove) repeats with a regular period, even if being height-modulated in order to change diffraction efficiency locally, are considered periodic structures.

"Multi-region" DOE refers to a DOE that has several internal regions with different diffractive optical response. The regions have a real area and the diffractive optical response within those regions is constant. The continuous changing of the diffractive optical response takes place between the regions with smooth transitions.

### Description of selected embodiments

In some solutions, herein called multi-region diffractive optical elements (DOEs), there are a plurality of different grating regions next to each other, the grating regions having different properties, such as the grating period, grating microstructure or grating line directions, and therefore a different diffractive optical response. These different grating regions may have dimensions which are in the same order of magnitude as the diameter of the light beam directed to the grating initially, which can be e.g. 1 - 3 mm. This has the drawback that boundary zones between two grating regions cause significant distortion to the light field, as the beam is split every time it hits such boundary zone, and light power is lost to stray angles. The same problem is, however, present even with narrower beams and/or larger grating regions, since the amount of bounces within the waveguide is typically very large and the probability of boundary zone hits is therefore large. The problem is thus of particular significance in complex grating designs in which the beam bounces several times at a multi-area grating while propagating in the waveguide. After a number of bounces, the beam is fragmented and significant amount of light power is lost.

There is a need for improved multi-region diffractive optical elements.

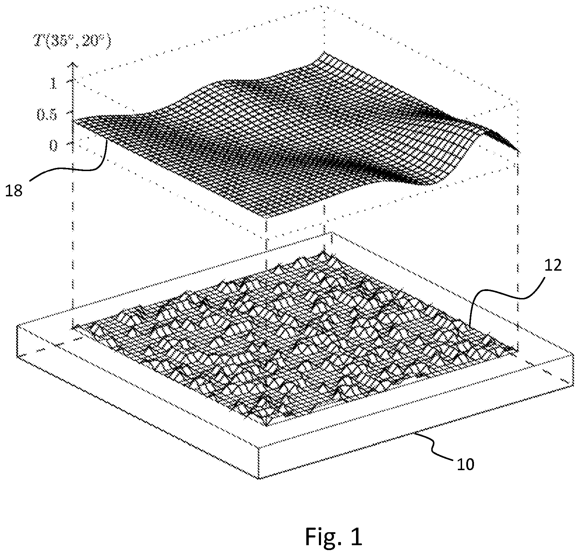

In some embodiments, the diffractive optical element comprises regions with different optical responses distributed in the waveguide plane. That is, the DOE is truly two-dimensional. An example of such waveguide is shown in Fig. 1.

Fig. 1 shows a waveguide 10 comprising a schematic DOE 12 on a surface thereof. To illustrate the continuously changing diffractive optical response in the waveguide plane, an exemplary response is shown. The response herein is the intensity of transmissive diffraction of the DOE into a specific angle (say, polar angle 10 degrees and azimuth angle 33 degrees) for light incoming at an incident polar angle of 35 degrees and azimuth angle of 20 degrees with a fixed light wavelength, as a function of the location in the plane of the waveguide.

Although the response is herein illustrated only for one predefined diffraction angle with a predefined angle of incidence and wavelength, the intensity typically changes continuously for a plurality of angles of incidence and/or wavelengths. Thus, to llustrate the full diffractive optical response of the DOE, similar continuous response graphs can be produced for several incident angles, diffraction angles and wavelength parameter sets. Like in the example of Fig. 1, in some embodiments, at each location of the diffractive optical element, the diffractive optical response is non-zero. In other words, there are no non-diffractive regions in the diffractive optical element.

In some embodiments, the DOE contains at least one zone that has non-periodic microstructure. In some cases, the DOE is non-periodic over the whole element.

In some embodiments not according to the claimed invention, the diffractive optical response of the diffractive optical element changes continuously over the whole element. That is, there are no constant-grating regions in the DOE.

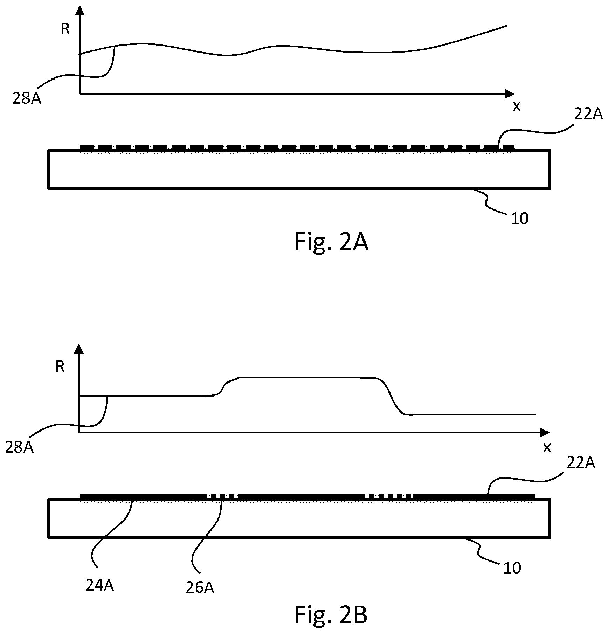

Fig. 2A illustrates the case of Fig. 1 as a cross-sectional view. The continuous-response DOE is denoted with numeral 22A and its response R with numeral 28A.

In some embodiments, illustrated by Fig. 2B, within at least some regions of the DOE, herein denoted with numeral 22A, the diffractive optical response 28A is constant. These regions 24A may comprise a periodic diffractive grating. Between these regions, i.e. at intermediate regions 26A the response is continuous. These regions may contain a non-periodic microstructure.

In some embodiments, the microstructure of the DOE is free from sections with a graded profile, in particular free from lateral height slopes, which take the local height of the microstructure and therefore the local efficiency of the DOE gradually to zero or close to zero, or, alternatively take the height to the height of a neighboring grating contained by the waveguide element.

In some embodiments, the height of the microstructure throughout the DOE is approximately constant. Thus, the continuous variation of diffractive optical response is achieved by other properties of the microstructure than feature height.

In alternative embodiments, there is within the DOE a plurality of approximately constant height regions with different non-zero microstructure heights, the diffractive optical response from one region to another changing continuously.

Approximately constant height herein means that the local height variation of the microstructure is less than 10 %.

Local height of the microstructure is herein defined, applying to non-periodic and irregular diffractive structures as well as to periodic and regular diffractive structures, as the height difference between a lowest and highest point of the microstructure (lowest valley to highest peak) in the normal direction of the waveguide plane within a circular area having a diameter of 5 µm.

Typically, the microstructure height is between 20 and 500 nm.

Lateral maximum feature dimensions can vary for example from 10 to 700 nm.

In some embodiments, at each location of the diffractive optical element, the optical response of the diffractive optical element is unique with respect to other locations thereof.

Waveguide structures with continuous optical response find uses in for example augmented reality (AR) applications, where an improvement of the characteristics of the system require the use of a multitude of different propagation directions for each FOV angle. In such systems, the standard way of dividing the grating region into adjacent sub-regions, where the grating structures is held constant, cannot be used. This is so since the beams corresponding to the FOV angles will be subdivided by the sub-region boundaries to such an extent that their parts become highly divergent and the diffraction into unwanted propagation directions as associated with the subdivisions, and which leads to FOV angle cross-talk, becomes significant.

The use of structures with a continuous optical response furthermore adds system tolerance to small errors since for example slight misalignments of the beam or beam travel due to manufacturing errors cause only small changes to the overall output of the system. This is in contrast to systems with clearly defined sub-regions, where misalignments of the beams can lead to dramatic changes in overall output.

In some embodiments, the waveguide is a display waveguide of a diffractive personal display, such as a head mounted display (HMD) or head-up display (HUD), and the diffractive optical element is an in-coupling element, exit pupil expander element or out-coupling element thereof. The DOE can also be an intermediate power redistribution element (intermediate DOE) between a plurality of waveguide layers.

Indeed, in some embodiments, the waveguide is a multilayered waveguide and the diffractive optical element is an intermediate DOE positioned between two waveguide layers and interacts optically with the two layers. In particular, there may be provided a waveguide display element for guiding an image from a first lateral zone of the element to a second lateral zone of the element, the element comprising a plurality of waveguide layers on top of each other, and the element further comprising at least one intermediate DOE of the present kind arranged between two of the waveguide layers. The intermediate DOE is adapted to change the distribution of propagating light power between the layers, according to its local diffractive optical response.

According to one aspect, a method of designing an optical waveguide is provided. The method comprises
- choosing a first desired optical response of a first region of the diffractive optical element,
- choosing at least one second desired optical response of at least one second region of the diffractive optical element,
- interpolating a plurality of further optical responses of a plurality locations between the first region and the at least one second region so that an essentially continuous optical response distribution is formed.

The method may further comprise
- selecting a first diffractive pattern providing the first optical response,
- selecting at least one second diffractive pattern providing the at least one second optical response,
- selecting a plurality of other diffractive patterns providing said further optical responses, wherein the geometric properties of the other patterns are spatially continuously changing along the waveguide from the first region to the at least one second region.

According to one aspect, a method of manufacturing an optical waveguide is herein described. The method comprises first determining the diffractive patterns as discussed above and then manufacturing the waveguide having a diffractive optical element composed of the diffractive patterns determined.

Once designed for example using the principles discussed herein, the diffractive optical element can be manufactured using optical microfabrication techniques known *per se.* Embodiments of the invention can be utilized in various personal display devices, augmented reality (AR), virtual reality (VR) and mixed reality (MR) devices, like near-to-the-eye displays (NEDs) and other head-mounted displays (HMDs), as well as head-up displays (HUDs), in their different forms.

## Claims

1. An optical waveguide comprising
- a waveguide body (10) capable of guiding light in a waveguide plane in two dimensions, and
- a diffractive optical element (22A) provided on a surface or within the waveguide body (10), the diffractive optical element (22A) extending in said two dimensions and each location of the diffractive optical element (22A) having a diffractive optical response for light directed thereto,
wherein
- the diffractive optical element (22A) is a multi-region element comprising a plurality of constant-response regions (24A) each having a constant diffractive optical response , and intermediate regions (26A) between said constant-response regions (24A);
**characterized in that**
- each of the intermediate regions (26A) being adjacent at least a first and a second constant-response region of said plurality of constant-response regions (24A), said constant diffractive optical response of said first constant-response region having a first value, said constant diffractive optical response of said second constant-response region having a second value different from said first value, and said intermediate region (26A) being configured such that the diffractive optical response of said intermediate region (26A) has a continuous transition in the waveguide plane from said first value to said second value

2. The optical waveguide according to claim 1, wherein said constant-response regions (24A) are distributed in the diffractive optical element (22A) in two dimensions of the waveguide plane.

3. The optical waveguide according to claim 1 or 2, wherein each of said constant-response regions (24A) has an essentially non-zero diffractive optical response.

4. The waveguide according to any of the preceding claims, wherein the diffractive optical element (22A) is essentially non-periodic throughout the element (22A).

5. The optical waveguide according to any of claims 1 - 3, wherein at least some of the regions (24A) comprise a periodic diffractive grating.

6. The waveguide according to any of the preceding claims, wherein at least at the intermediate regions (26A), the diffractive optical element (22A) comprises an essentially non-periodic microstructure defining the diffractive optical response.

7. The waveguide according to any of the preceding claims, wherein the diffractive optical response that changes continuously is the intensity of diffraction to at least one predefined angle with a predefined angle of incidence and wavelength.

8. The waveguide according to any of the preceding claims, wherein the diffractive optical response of the intermediate regions (26A) changes continuously for a plurality of angles of incidence and/or wavelengths.

9. The waveguide according to any of the preceding claims, wherein the waveguide is a display waveguide of a diffractive personal display, such as a head mounted display or head-up display, and the diffractive optical element (22A) is an in-coupling diffractive optical element, exit pupil expander diffractive optical element or out-coupling diffractive optical element thereof, or a combination diffractive optical element serving for two or more of said functions.

10. The waveguide according to any of the preceding claims, wherein the waveguide is a multilayered waveguide and the diffractive optical element (22A) is an intermediate diffractive optical element positioned between two waveguide layers and interacts optically with the two layers.

11. The waveguide according to any of the preceding claims, wherein the diffractive optical element (22A) consists of a non-periodic or partially non-periodic microstructure defining the diffractive optical response thereof, the microstructure having local height variation of less than 10 %.

12. The waveguide according to any of the preceding claims, wherein the diffractive optical element (22A) consists of a microstructure defining the diffractive optical response thereof, the microstructure being free from graded height profiles taking the local height of the microstructure to zero or close to zero, or, alternatively, take the height to the height of a neighboring diffractive optical element contained by the waveguide element.

13. A diffractive waveguide display, comprising
- an optical waveguide comprising a multi-region diffractive structure for modifying a light field inside the waveguide,
- an image projector for providing an image-containing light field inside the optical waveguide,
**characterized in that** the optical waveguide is a waveguide according to any of the preceding claims.

## Patentansprüche

1. Optischer Wellenleiter, umfassend
- einen Wellenleiter-Körper (10), der zum Leiten von Licht in einer Wellenleiter-Ebene in zwei Dimensionen geeignet ist, und
- ein gebeugtes, optisches Element (22A), das auf einer Fläche oder innerhalb des Wellenleiter-Körpers (10) bereitgestellt ist, wobei sich das gebeugte, optische Element (22A) in den genannten zwei Dimensionen erstreckt und wobei jeder Standort des gebeugten, optischen Elements (22A) eine gebeugte, optische Antwort für das dorthin gerichtete Licht aufweist,
wobei
- das gebeugte, optische Element (22A) ein multiregionales Element ist, umfassend eine Vielzahl von konstanten Antwortregionen (24A), die jeweils eine konstante, gebeugte, optische Antwort aufweisen, und Zwischenregionen (26A) zwischen den genannten konstanten Antwortregionen (24A);
**dadurch gekennzeichnet, dass**
- jede der Zwischenregionen (26A) wenigstens einer ersten und einer zweiten konstanten Antwortregion der genannten Vielzahl von konstanten Antwortregionen (24A) anliegt, wobei die genannte konstante, gebeugte, optische Antwort der genannten ersten konstanten Antwortregion einen ersten Wert aufweist, wobei die genannte konstante, gebeugte, optische Antwort der genannten zweiten konstanten Antwortregion einen zweiten Wert aufweist, der von dem genannten ersten Wert unterschiedlich ist, und wobei die genannte Zwischenregion (26A) derart ausgestaltet ist, dass die gebeugte, optische Antwort der genannten Zwischenregion (26A) einen kontinuierlichen Übergang in der Wellenleiter-Ebene von dem genannten ersten Wert zu dem genannten zweiten Wert aufweist.

2. Optischer Wellenleiter gemäß Anspruch 1, wobei die genannten konstanten Antwortregionen (24A) in dem gebeugten, optischen Element (22A) in zwei Dimensionen der Wellenleiterebene verteilt sind.

3. Optischer Wellenleiter gemäß Anspruch 1 oder 2, wobei jede der genannten konstanten Antwortregionen (24A) eine im Wesentlichen gebeugte, optische Antwort ungleich Null aufweist.

4. Wellenleiter gemäß irgendeinem der voranstehenden Ansprüche, wobei das gebeugte, optische Element (22A) im Wesentlichen durch das gesamte Element (22A) nicht periodisch ist.

5. Optischer Wellenleiter gemäß irgendeinem der Ansprüche 1-3, wobei wenigstens einige der Regionen (24A) eine periodische, optische Rasterung umfassen.

6. Wellenleiter gemäß irgendeinem der voranstehenden Ansprüche, wobei das gebeugte optische Element (22A) wenigstens an den Zwischenregionen (26A) eine im Wesentlichen nicht periodische Mikrostruktur umfasst, die die gebeugte optische Antwort definiert.

7. Wellenleiter gemäß irgendeinem der voranstehenden Ansprüche, wobei die gebeugte optische Antwort, die sich kontinuierlich ändert, die Beugungsintensität wenigstens eines vordefinierten Winkels mit einem vordefinierten Einfallswinkel und einer vordefinierten Wellenlänge ist.

8. Wellenleiter gemäß irgendeinem der voranstehenden Ansprüche, wobei die gebeugte optische Antwort der Zwischenregionen (26A) für eine Vielzahl von Einfallswinkeln und/oder Wellenlängen sich kontinuierlich ändert.

9. Wellenleiter gemäß irgendeinem der voranstehenden Ansprüche, wobei der Wellenleiter ein Anzeige-Wellenleiter einer gebeugten, persönlichen Anzeige, wie z.B. eine kopfverbundene Anzeige oder eine Frontscheiben-Anzeige, ist, und das gebeugte, optische Element (22A) ein einkoppelndes, gebeugtes, optisches Element, ein gebeugtes, optisches Austrittspupillen-Expanderelement oder ein auskoppelndes, gebeugtes, optisches Element davon oder ein gebeugtes optisches Kombinationselement ist, das zu zwei oder mehr der genannten Funktonen dient.

10. Wellenleiter gemäß irgendeinem der voranstehenden Ansprüche, wobei der Wellenleiter ein vielschichtiger Wellenleiter ist und das gebeugte, optische Element (22A) ein gebeugtes, optisches Zwischenelement ist, das zwischen zwei Wellenleiter-Schichten angeordnet ist und optisch mit den zwei Schichten interagiert.

11. Wellenleiter gemäß irgendeinem der voranstehenden Ansprüche, wobei das gebeugte, optische Element (22A) aus einer nicht periodischen oder teilweise nicht periodischen Mikrostruktur gebildet ist, die die gebeugte, optische Antwort darauf definiert, wobei die Mikrostruktur eine logische Höhenabweichung von weniger als 10 % aufweist.

12. Wellenleiter gemäß irgendeinem der voranstehenden Ansprüche, wobei das gebeugte, optische Element (22A) aus einer Mikrostruktur gebildet ist, die die gebeugte, optische Antwort darauf definiert, wobei die Mikrostruktur frei ist von abgestuften Höhenprofilen, die die örtliche Höhe der Mikrostruktur auf Null oder fast auf Null setzen oder alternativ die Höhe auf die Höhe eines benachbarten, gebeugten, optischen Elements setzen, das im Wellenleiter-Element enthalten ist.

13. Gebeugte Wellenleiter-Anzeige, umfassend
- einen optischen Wellenleiter, umfassend eine gebeugte Vielfachregionen-Struktur zum Ändern eines Lichtfeldes innerhalb des Wellenleiters,
- einen Lichtprojektor zum Bereitstellen eines bildzählenden Lichtfeldes innerhalb des optischen Wellenleiters,
**dadurch gekennzeichnet, dass** der optische Wellenleiter ein Wellenleiter gemäß irgendeinem der voranstehenden Ansprüche ist.

## Revendications

1. Guide d'ondes optique comprenant
- un corps de guide d'ondes (10) capable de guider la lumière dans un plan de guide d'ondes en deux dimensions, et
- un élément optique diffractif (22A) fourni sur une surface ou à l'intérieur du corps de guide d'ondes (10), l'élément optique diffractif (22A) s'étendant dans lesdites deux dimensions et chaque emplacement de l'élément optique diffractif (22A) ayant une réponse optique diffractive pour la lumière dirigée vers celui-ci,
dans lequel
- l'élément optique diffractif (22A) est un élément à zones multiples comprenant une pluralité de zones à réponse constante (24A), chacune ayant une réponse optique diffractive constante, et des zones intermédiaires (26A) entre lesdites zones à réponse constante (24A),
**caractérisé en ce que**
- chacune des zones intermédiaires (26A) étant adjacente au moins à une première et une seconde zone à réponse constante de ladite pluralité de zones à réponse constante (24A), ladite réponse optique diffractive constante de ladite première zone à réponse constante ayant une première valeur, ladite réponse optique diffractive constante de ladite seconde zone à réponse constante ayant une seconde valeur différente de ladite première valeur, et ladite zone intermédiaire (26A) étant configurée de telle sorte que la réponse optique diffractive de ladite zone intermédiaire (26A) a une transition continue dans le plan de guide d'ondes depuis ladite première valeur vers ladite seconde valeur.

2. Guide d'ondes optique selon la revendication 1, dans lequel lesdites zones à réponse constante (24A) sont réparties dans l'élément optique diffractif (22A) dans deux dimensions du plan de guide d'ondes.

3. Guide d'ondes optique selon la revendication 1 ou 2, dans lequel chacune desdites zones à réponse constante (24A) a une réponse optique diffractive sensiblement égale à zéro.

4. Guide d'ondes optique selon une quelconque des revendications précédentes, dans lequel l'élément optique diffractif (22A) est sensiblement non-périodique dans l'ensemble de l'élément (22A).

5. Guide d'ondes optique selon une quelconque des revendications 1 à 3, dans lequel au moins certaines des zones (24A) comprennent un réseau de diffraction périodique.

6. Guide d'ondes optique selon une quelconque des revendications précédentes, dans lequel au moins au niveau des zones intermédiaires (26A), l'élément optique diffractif (22A) comprend une microstructure sensiblement non-périodique définissant la réponse optique diffractive.

7. Guide d'ondes optique selon une quelconque des revendications précédentes, dans lequel la réponse optique diffractive qui change continuellement est l'intensité de la diffraction sur au moins un angle prédéfini avec un angle d'incidence et une longueur d'ondes prédéfinis.

8. Guide d'ondes optique selon une quelconque des revendications précédentes, dans lequel la réponse optique diffractive des zones intermédiaires (26A) change continuellement pour une pluralité d'angles d'incidence et/ou de longueurs d'ondes.

9. Guide d'ondes optique selon une quelconque des revendications précédentes, dans lequel le guide d'ondes est un guide d'ondes d'affichage d'un affichage personnel diffractif, tel qu'un visiocasque ou un affichage tête haute, et l'élément optique diffractif (22A) est un élément optique diffractif de couplage d'entrée, un élément optique diffractif d'expanseur de pupille de sortie ou un élément optique diffractif de couplage de sortie de celui-ci, ou un élément optique diffractif combiné desservant au moins deux desdites fonctions.

10. Guide d'ondes optique selon une quelconque des revendications précédentes, dans lequel le guide d'ondes est un guide d'ondes multicouches et l'élément optique diffractif (22A) est un élément optique diffractif intermédiaire, positionné entre deux couches de guide d'ondes et interagit optiquement avec les deux couches.

11. Guide d'ondes selon une quelconque des revendications précédentes, dans lequel l'élément optique diffractif (22A) consiste en une microstructure non-périodique ou partiellement non-périodique définissant la réponse optique diffractive de celui-ci, la microstructure ayant une variation de hauteur locale inférieure à 10 %.

12. Guide d'ondes optique selon une quelconque des revendications précédentes, dans lequel l'élément optique diffractif (22A) consiste en une microstructure définissant la réponse optique diffractive de celui-ci, la microstructure étant exempte de profils de hauteur classés en considérant la hauteur locale de la microstructure à zéro ou proche de zéro, ou, en variante, considère la hauteur sur la hauteur d'un élément optique diffractif adjacent contenu par l'élément de guide d'ondes.

13. Affichage à guide d'ondes diffractif, comprenant
- un guide d'ondes optique comprenant une structure diffractive à zones multiples destinée à modifier un champ de lumière à l'intérieur du guide d'ondes,
- un projecteur d'images destiné à fournir un champ de lumière contenant une image à l'intérieur du guide d'ondes optique,
**caractérisé en ce que** le guide d'ondes optique est un guide d'ondes selon une quelconque des revendications précédentes.
